(19) Europäisches Patentamt
European Patent Office
Office européen des brevets

(11) **EP 3 462 654 B1**

(12) **EUROPEAN PATENT SPECIFICATION**

(45) Date of publication and mention
of the grant of the patent:
**02.12.2020 Bulletin 2020/49**

(51) Int Cl.:
*H04L 1/00* (2006.01)     *H04L 1/18* (2006.01)

(21) Application number: **18197349.6**

(22) Date of filing: **27.09.2018**

(54) **APPARATUS FOR SUPPORTING 1024 QUADRATURE AMPLITUDE MODULATION**

VORRICHTUNG ZUR UNTERSTÜTZUNG VON 1024-QUADRATURAMPLITUDENMODULATION

APPAREIL POUR PRENDRE EN CHARGE UNE MODULATION D'AMPLITUDE EN QUADRATURE 1 024

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2017 US 201762564975 P**
**02.10.2017 US 201762567198 P**

(43) Date of publication of application:
**03.04.2019 Bulletin 2019/14**

(73) Proprietor: **INTEL Corporation**
**Santa Clara, CA 95054 (US)**

(72) Inventor: **DAVYDOV, Alexei**
**Nizhny Novgorod 603132 (RU)**

(74) Representative: **Barton, Russell Glen**
**Withers & Rogers LLP**
**4 More London Riverside**
**London SE1 2AU (GB)**

(56) References cited:
**EP-A1- 1 313 247**     **EP-A1- 3 142 278**
**US-A1- 2010 202 561**     **US-A1- 2017 207 878**

- HUAWEI ET AL: "Discussion on support of DL 1024QAM", 3GPP DRAFT; R1-1712091, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051314911, Retrieved from the Internet: URL:http://www.3gpp.org/ftp/Meetings_3GPP_SYNC/RAN1/Docs/ [retrieved on 2017-08-20]

## Description

### Field

Examples relate to wireless communication systems, more particularly to an apparatus, method, and circuitry for supporting 1024 quadrature amplitude modulation (QAM) in wireless transmissions and receptions.

### Background

In current macro wireless communication system, heterogeneous networks have been deployed. Small cells such as femto cells, pico cells, micro-cells, etc. have been deployed within macro cells. High geometry experienced by user equipments (UEs) in some small cell deployments provides the possibility for using higher order modulation scheme such as 1024QAM for downlink transmissions. However, support of the additional modulation scheme requires some changes in the downlink control signaling for indication of a modulation and coding scheme (MCS) with 1024QAM and modification in uplink control signaling for a channel quality indicator (CQI) for reporting a link quality corresponding to 1024QAM. A straightforward extension of the existing signaling by adding additional bits in the corresponding fields of the downlink and uplink control information may not be desirable, due to additional signaling overhead and potential negative impact on the uplink coverage for some of the uplink control messages (e.g. physical uplink control channel (PUCCH)).

EP 3142278 discloses that a base station selects an MCS table according to a transmission type and predefined information, and transmits the downlink control signaling to a terminal including a modulation and coding scheme field $I_{MCS}$. The MCS table includes an MCS table supporting an M-order modulation and an MCS table not supporting an M-order modulation, M>64.

US 2017/207878 discloses techniques for supporting higher modulation orders for communications in a wireless communication network. US 2017/207878 discloses that the eNBs and/or UE may determine that a higher modulation order is supported for the transmission of data channels based on at least three MCS tables each of which may be associated with a different maximum modulation order.

Huawei et al., "Discussion on support of DL 1024QAM" 3GPP Draft, R1-1712091 is a 3GPP standard-related document regarding discussion on support of downlink 1024QAM. Huawei document proposes for introduction of new CQI entries and MCS entries for 1024QAM.

EP 1313247 discloses that in a first transmission, first data bits are transmitted mapped onto a first data symbol using a first combination of a redundancy version and a signal constellation version, and in a retransmission, all or part of the first data bits are transmitted mapped onto a second data symbol using a second combination of redundancy version and signal constellation version.

US 2019/202561 discloses using different MCSs for different spatial layers. As an example, US 2019/202561 discloses that in a two-layer system where a first layer is significantly stronger than a second layer, system uses higher-order modulation for the first layer and lower order modulation for the second layer.

### Brief description of the Figures

Some examples of apparatuses and/or methods will be described in the following by way of example only, and with reference to the accompanying figures, in which

FIG. 1 illustrates an architecture of a system of a network in accordance with some embodiments;

FIG. 2 illustrates example components of a device in accordance with some embodiments;

FIG. 3 illustrates example interfaces of baseband circuitry in accordance with some embodiments;

FIG. 4A is a diagram of an example baseband circuitry of a UE that is configured to use 1024QAM for wireless transmission and reception in accordance with one example;

FIG. 4B is a diagram of an example baseband circuitry of a radio access network (RAN) node that is configured to use 1024QAM for wireless transmission and reception in accordance with one example;

FIG. 5 shows an example constellation map for 1024QAM;

FIG. 6 is an illustration of a control plane protocol stack in accordance with some embodiments;

FIG. 7 is an illustration of a user plane protocol stack in accordance with some embodiments;

FIG. 8 illustrates components of a core network in accordance with some embodiments;

FIG. 9 is a block diagram illustrating components, according to some example embodiments, of a system to support network function virtualization (NFV);

FIG. 10 is a block diagram illustrating components, according to some example embodiments, able to read instructions from a machine-readable or computer-readable medium and perform any one or more of the methodologies discussed herein; and

FIG. 11 illustrates an architecture of a system of a network in accordance with some embodiments.

## Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Like numbers refer to like or similar elements throughout the description of the figures, which may be implemented identically or in modified form when compared to one another while providing for the same or a similar functionality. The invention is defined by the independent claims. Preferred embodiments are defined by the dependent claims.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

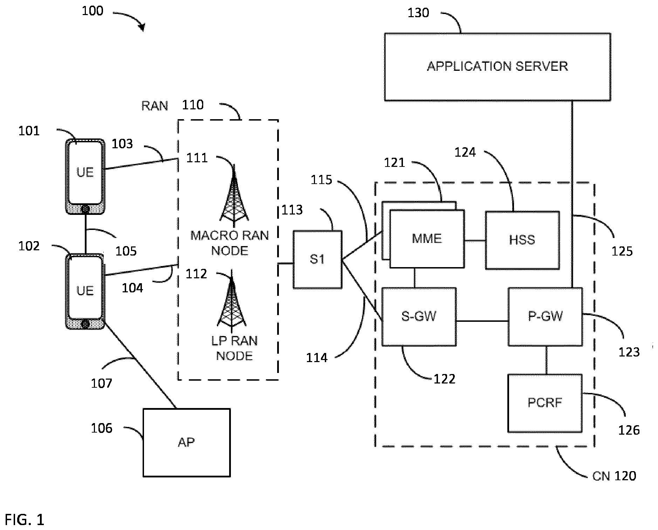

FIG. 1 illustrates an architecture of a system 100 of a network in accordance with some embodiments. The system 100 is shown to include a user equipment (UE) 101 and a UE 102. The UEs 101 and 102 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 101 and 102 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 101 and 102 may be configured to connect, e.g., communicatively couple, with a radio access network (RAN) 110 - the RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH). The UE 102 is shown to be configured to access an access point (AP) 106 via connection 107. The connection 107 can comprise a local wireless connection, such as a connection consistent with any IEEE 802.11 protocol, wherein the AP 106 would comprise a wireless fidelity (WiFi®) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some embodiments, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management.

In accordance with some embodiments, the UEs 101 and 102 can be configured to communicate using Orthogonal Frequency-Division Multiplexing (OFDM) communication signals with each other or with any of the RAN nodes 111 and 112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 111 and 112 to the UEs 101 and 102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 101 and 102. The physical downlink control channel (PDCCH) may carry information about the transport format and resource allocations related to the PDSCH channel, among other things. It may also inform the UEs 101 and 102 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 111 and 112 based on channel quality information fed back from any of the UEs 101 and 102. The downlink resource assignment information may be sent on the PDCCH used for (e.g., assigned to) each of the UEs 101 and 102.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 110 is shown to be communicatively coupled to a core network (CN) 120 via an S1 interface 113. In embodiments, the CN 120 may be an evolved packet core (EPC) network, a NextGen Packet Core (NPC) network, or some other type of CN. In this embodiment the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this embodiment, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities may include lawful intercept, charging, and some policy enforcement.

The P-GW 123 may terminate an SGi interface toward a PDN. The P-GW 123 may route data packets between the EPC network 123 and external networks such as a network including the application server 130 (alternatively referred to as application function (AF)) via an Internet Protocol (IP) interface 125. Generally, the application server 130 may be an element offering applications that use IP bearer resources with the core network (e.g., UMTS Packet Services (PS) domain, LTE PS data services, etc.). In this embodiment, the P-GW 123 is shown to be communicatively coupled to an application server 130 via an IP communications interface 125. The application server 130 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Enforcement Function (PCRF) 126 is the policy and charging control element of the CN 120. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 126 may be communicatively coupled to the application server 130 via the P-GW 123. The application server 130 may signal the PCRF 126 to indicate a new service flow and select the appropriate Quality of Service (QoS) and charging parameters. The PCRF 126 may provision this rule into a Policy and Charging Enforcement Function (PCEF) (not shown) with the appropriate traffic flow template (TFT) and QoS class of identifier (QCI), which commences the QoS and charging as specified by the application server 130.

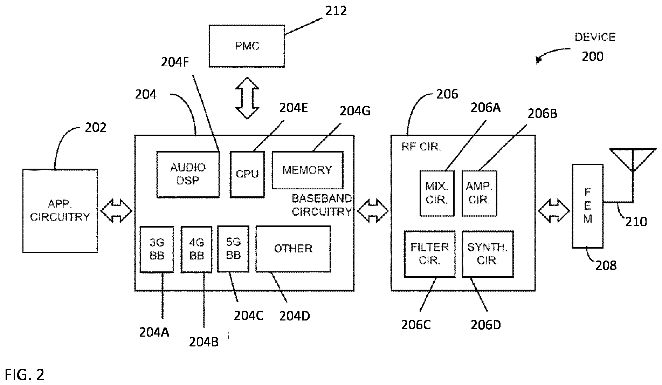

FIG. 2 illustrates example components of a device 200 in accordance with some embodiments. In some embodiments, the device 200 may include application circuitry 202, baseband circuitry 204, Radio Frequency (RF) circuitry 206, front-end module (FEM) circuitry 208, one or more antennas 210, and power management circuitry (PMC) 212 coupled together at least as shown. The components of the illustrated device 200 may be included in a UE or a RAN node. In some embodiments, the device 200 may include less elements (e.g., a RAN node may not utilize application circuitry 202, and instead include a processor/controller to process IP data received from an EPC). In some embodiments, the device 200 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 200. In some embodiments, processors of application circuitry 202 may process IP data packets received from an EPC.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), sixth generation (6G), etc.). The baseband circuitry 204 (e.g., one or more of baseband processors 204A-D) may handle various radio control functions that enable communication with one or more radio networks via the RF circuitry 206. In other embodiments, some or all of the functionality of baseband processors 204A-D may be included in modules stored in the memory 204G and executed via a Central Processing Unit (CPU) 204E. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include one or more audio digital signal processor(s) (DSP) 204F. The audio DSP(s) 204F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the receive signal path of the RF circuitry 206 may include mixer circuitry 206a, amplifier circuitry 206b and filter circuitry 206c. In some embodiments, the transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a lowpass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c.

In some embodiments, the mixer circuitry 206a of the receive signal path and the mixer circuitry 206a of the transmit signal path may include two or more mixers and may be arranged for quadrature down-conversion and up-conversion, respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct down-conversion and direct up-conversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210. In various embodiments, the amplification through the transmit or receive signal paths may be done solely in the RF circuitry 206, solely in the FEM 208, or in both the RF circuitry 206 and the FEM 208.

In some embodiments, the FEM circuitry 208 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some embodiments, the PMC 212 may manage power provided to the baseband circuitry 204. In particular, the PMC 212 may control power-source selection, voltage scaling, battery charging, or DC-to-DC conversion. The PMC 212 may often be included when the device 200 is capable of being powered by a battery, for example, when the device is included in a UE. The PMC 212 may increase the power conversion efficiency while providing desirable implementation size and heat dissipation characteristics.

While FIG. 2 shows the PMC 212 coupled only with the baseband circuitry 204. However, in other embodiments, the PMC 2 12 may be additionally or alternatively coupled with, and perform similar power management operations for, other components such as, but not limited to, application circuitry 202, RF circuitry 206, or FEM 208.

In some embodiments, the PMC 212 may control, or otherwise be part of, various power saving mechanisms of the device 200. For example, if the device 200 is in an RRC_Connected state, where it is still connected to the RAN node as it expects to receive traffic shortly, then it may enter a state known as Discontinuous Reception Mode (DRX) after a period of inactivity. During this state, the device 200 may power down for brief intervals of time and thus save power.

If there is no data traffic activity for an extended period of time, then the device 200 may transition off to an RRC_Idle state, where it disconnects from the network and does not perform operations such as channel quality feedback, handover, etc. The device 200 goes into a very low power state and it performs paging where again it periodically wakes up to listen to the network and then powers down again. The device 200 may not receive data in this state, in order to receive data, it may transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 202 and processors of the baseband circuitry 204 may be used to execute elements of one or more instances of a protocol stack. For example, processors of the baseband circuitry 204, alone or in combination, may be used execute Layer 3, Layer 2, or Layer 1 functionality, while processors of the application circuitry 204 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

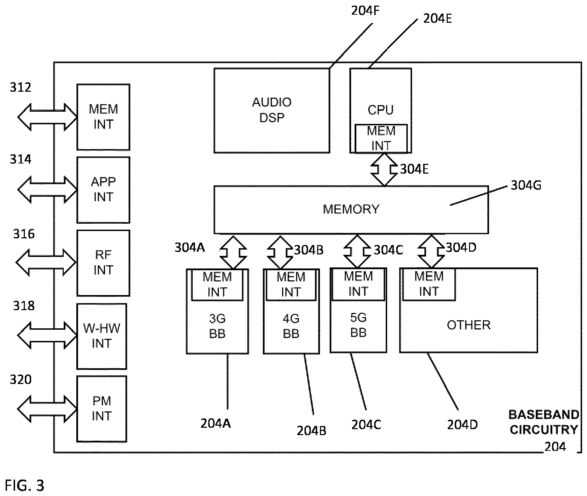

FIG. 3 illustrates example interfaces of baseband circuitry in accordance with some embodiments. As discussed above, the baseband circuitry 204 of FIG. 2 may comprise processors 204A-204E and a memory 204G utilized by said processors. Each of the processors 204A-204E may include a memory interface, 304A-304E, respectively, to send/receive data to/from the memory 204G.

The baseband circuitry 204 may further include one or more interfaces to communicatively couple to other circuitries/devices, such as a memory interface 312 (e.g., an interface to send/receive data to/from memory external to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth® components (e.g., Bluetooth® Low Energy), Wi-Fi® components, and other communication components), and a power management interface 320 (e.g., an interface to send/receive power or control signals to/from the PMC 212).

Examples are disclosed for MCS and CQI table design for supporting 1024QAM and configuration of 1024QAM. In examples, one or more of the existing entries of the legacy MCS and CQI tables are removed and replaced with 1024QAM entries. Examples are also provided to introduce radio resource control (RRC) configuration of CQI and MCS tables for 1024QAM with a fallback mode support to the legacy MCS table. In some examples, the use of 1024QAM MCS and CQI tables may be limited to specific downlink control information (DCI) formats with cell radio network temporary identity (C-RNTI) or semi-persistent scheduling cell radio network temporary identity (SPS-C-RNTI) to support a fallback mode operation and address ambiguity issue due to RRC reconfiguration.

It should be noted that the examples disclosed herein for 1024QAM may be extended to higher order modulation and coding schemes (e.g. 4096QAM or higher).

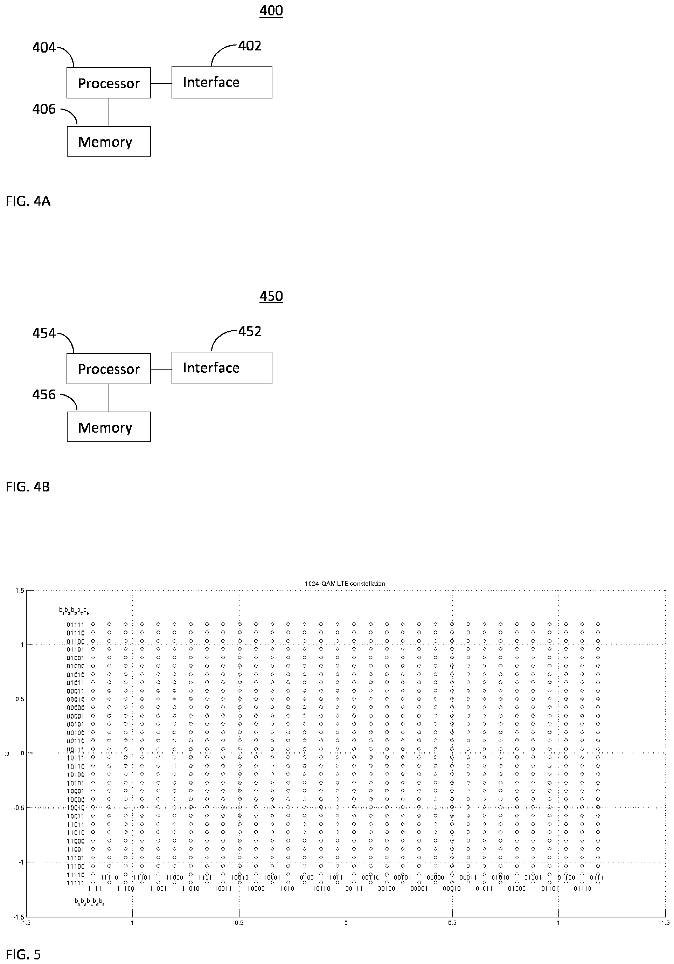

FIG. 4A is a diagram of an example baseband circuitry 400 of a UE 101/102 that is configured to use 1024QAM for wireless transmission and reception in accordance with one example. The baseband circuitry 400 may include an interface 402, a processor 404, and a memory 406. The interface 402 is to send and receive data to and from a radio frequency (RF) circuitry (not shown) or to and from other processors or components (not shown). The memory 406 is configured to store instructions that may be loaded into and executed by the processor 404.

The instructions that may be executed by the processor 404 may be configured to generate a CQI report corresponding to a CQI table including an entry for 1024QAM modulation, wherein the CQI table is configured per channel state information (CSI) subframe set, and process baseband signals received via the RF circuitry from a RAN 110 using an MCS table including an entry for 1024QAM modulation if 1024QAM is configured for at least one CSI subframe set.

FIG. 4B is a diagram of an example baseband circuitry of a RAN node 111/112 that is configured to use 1024QAM for wireless transmission and reception in accordance with one example. The baseband circuitry 450 may include an interface 452, a processor 454, and a memory 456. The interface 452 is to send and receive data to and from an RF circuitry (not shown) or to and from other processors or components (not shown). The memory 456 is configured to store instructions that may be loaded into and executed by the processor 454.

The instructions that may be executed by the processor 454 may be configured to process a CQI report received from a UE 101/102 corresponding to a CQI table including an entry for 1024QAM modulation, wherein the CQI table is configured per CSI subframe set, and schedule a downlink transmission for the UE 101/102 using an MCS table including an entry for 1024QAM modulation if 1024QAM is configured for at least one CSI subframe set for the UE.

The UE 101/102 measures a downlink channel and reports a CQI to the RAN node 111/112. The CQI may indicate the highest modulation and the code rate at which the block error rate (BLER) of the channel being measured does not exceed 10 %. A CQI table is pre-configured and the UE 101/102 (e.g. the baseband circuitry 400) may select one of the entries in the CQI table for CQI reporting. Tables 1 and 2 are conventional (legacy) CQI tables. The CQI table in Table 1 includes 15 entries for supporting quadrature phase shift keying (QPSK), 16QAM, and 64QAM and one entry for out of range. The CQI table in Table 2 includes 15 entries for supporting QPSK, 16QAM, 64QAM and 256QAM and one entry for out of range. A CQI is coded to four bits.

In one example, in order to support 1024QAM, one or more entries of the CQI table in Table 2 may be removed and replaced with one or more entries for 1024QAM. For example, CQI entries corresponding to CQI indices #5 and #7 in the CQI table in Table 2 may be removed and replaced with 1024QAM entries. Alternatively, the CQI entry in Table 2 with the highest efficiency value for 256QAM (CQI index #15 in Table 2) may also be removed and replaced with an 1024QAM entry. In other examples, a different set of CQI entries may be removed and replaced with 1024QAM entries (e.g. CQI indices #5 and #15, or CQI indices #5, #7, #9, and #15).

Table 1

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Table 2

| CQI index | modulation | code rate x 1024 | efficiency |
|---|---|---|---|
| 0 | out of range | | |
| 1 | QPSK | 78 | 0.1523 |
| 2 | QPSK | 193 | 0.3770 |
| 3 | QPSK | 449 | 0.8770 |

(continued)

| CQI index | modulation | code rate x 1024 | efficiency |
|-----------|------------|------------------|------------|
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

Table 3 shows an example CQI table for supporting 1024QAM in accordance with one example. In this example, three entries are removed from the CQI table in Table 2 and replaced with three entries for 1024QAM. After replacing some of the entries for 1024QAM, the CQI entries may be rearranged in an order of efficiency.

In the example shown in Table 3, the first 1024QAM entry (CQI index #13 in Table 3) may be selected to have the same or substantially close spectral efficiency of the removed last 256QAM entry (CQI index #15 in Table 2). In another example, the spectral efficiency for the highest CQI entry (CQI index #15 in Table 3) may be obtained by linear scaling of the spectral efficiency for the highest CQI entry in Table 2 or Table 1 according to the ratio of modulation orders (e.g. $9.2578 = 7.4063 \times 10/8$ in case it is obtained from Table 2, or $9.2578 = 5.5547 \times 10/6$ in case it is obtained from Table 1). The intermediate CQI entry or entries for 1024QAM (CQI index #14 in Table 3 in this example) may be obtained by linear averaging or linear interpolation of the spectral efficiencies of two 1024QAM entries, for example 1024QAM entries corresponding to the lowest index and high index with 1024QAM modulation (CQI indices #13 and #15 in Table 3). For example, in case of single intermediate entry, the spectral efficiency for the intermediate 1024QAM entry (CQI index #14) may be obtained as $(7.4023 + 9.2578)/2 = 8.3301$. For example, a second last CQI entry corresponding to 1024QAM (e.g. a CQI index #14 in Table 3) in the CQI table may be obtained based on averaging of spectral efficiency values of the last CQI entry corresponding to 1024QAM (e.g. a CQI index #15 in Table 3) and a CQI entry corresponding to 256QAM with a highest spectral efficiency in a CQI table supporting 256QAM (e.g. a CQI index #14 in Table 2). After replacing of the CQI entries, the CQI indices may be ordered according to the spectral efficiencies of the CQIs.

Table 3

| CQI index | modulation | code rate x 1024 | efficiency |
|-----------|------------|------------------|------------|
| 0 | out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 616 | 2.4063 |
| 6 | 64QAM | 567 | 3.3223 |
| 7 | 64QAM | 666 | 3.9023 |
| 8 | 64QAM | 772 | 4.5234 |
| 9 | 64QAM | 873 | 5.1152 |

(continued)

| CQI index | modulation | code rate x 1024 | efficiency |
|---|---|---|---|
| 10 | 256QAM | 711 | 5.5547 |
| 11 | 256QAM | 797 | 6.2266 |
| 12 | 256QAM | 885 | 6.9141 |
| 13 | 1024QAM | 758 | 7.4023 |
| 14 | 1024QAM | 853 | 8.3301 |
| 15 | 1024QAM | 948 | 9.2578 |

The effective code rates (the third column in Table 3) may be obtained by dividing the efficiency (spectral efficiency) values by the modulation order (M = 10 for 1024QAM, 8 for 256QAM, 6 for 64QAM, 4 for 16QAM, 2 for QPSK) and multiplying with 1024 (the resulting code rate is represented using 10 bits) and then rounding to the nearest integer (e.g. 948 = round (9.2578/10×1024) for entry #15 in Table 3).

The RAN node 111/112 receives the CQI report(s) from the UE 101/102 and schedules downlink transmissions (e.g. PDSCH transmissions) for the UE 101/102 based on the received CQI report(s). In scheduling the downlink transmission for the UE 101/102, the RAN node 111/112 selects an MCS and indicates the selected MCS in the downlink control signaling (i.e. via a PDCCH transmission). An MCS table is pre-configured and the RAN node 111/112 selects one of the entries of the MCS table. Table 4 shows one conventional (legacy) MCS table supporting up to 256QAM.

Table 4

| MCS Index $I_{MCS}$ | Modulation Order $Q_m$ | TBS Index $I_{TSS}$ |
|---|---|---|
| 0 | 2 | 0 |
| 1 | 2 | 2 |
| 2 | 2 | 4 |
| 3 | 2 | 6 |
| 4 | 2 | 8 |
| 5 | 4 | 10 |
| 6 | 4 | 11 |
| 7 | 4 | 12 |
| 8 | 4 | 13 |
| 9 | 4 | 14 |
| 10 | 4 | 15 |
| 11 | 6 | 16 |
| 12 | 6 | 17 |
| 13 | 6 | 18 |
| 14 | 6 | 19 |
| 15 | 6 | 20 |
| 16 | 6 | 21 |
| 17 | 6 | 22 |
| 18 | 6 | 23 |
| 19 | 6 | 24 |
| 20 | 8 | 25 |
| 21 | 8 | 27 |

(continued)

| MCS Index $I_{MCS}$ | Modulation Order $Q_m$ | TBS Index $I_{TSS}$ |
|---|---|---|
| 22 | 8 | 28 |
| 23 | 8 | 29 |
| 24 | 8 | 30 |
| 25 | 8 | 31 |
| 26 | 8 | 32 |
| 27 | 8 | 33/33A |
| 28 | 2 | |
| 29 | 4 | reserved |
| 30 | 6 | |
| 31 | 8 | |

Similar to the CQI table, in order to support 1024QAM, an MCS table for supporting 1024QAM may be generated by removing some of the entries of the conventional MCS table and replacing them with 1024QAM entries. As explained above, a CQI table for supporting 1024QAM may be generated by removing some of the existing CQI indices, (e.g. CQI indices #5 and #7), in the CQI table and replacing them with 1024QAM entries. The CQI table and the MCS table are associated with each other. Some of the MCS table entries directly correspond to the CQI table entries, and other MCS entries are obtained by interpolating some of the associated CQI entries. In one example, in order to generate an MCS table for supporting 1024QAM, one or more MCS entries, (e.g. MCS indices #6, #8, #10, #12 in Table 4), which are obtained by linear interpolation from the removed CQI indices (e.g. #5, #7), are removed from the legacy MCS table (Table 4) and replaced with MCS entries for 1024QAM.

In another example, the MCS entry corresponding to a highest MCS index, (i.e. MCS index #27 in Table 4), is also removed and replaced with an 1024QAM entry since the modulation order is changed to 1024QAM and the previous transport block size (TBS) value is no longer applicable. In the example shown in Table 4, total 5 MCS entries #6, #8, #10, #12 and #27 may be removed to accommodate 1024QAM entries with new transport block sizes.

Table 5 shows an example of MCS table supporting 1024QAM in accordance with one example. In the example shown in Table 5, five entries are included for 1024QAM. One of the new entries supports adaptive hybrid automatic repeat request (HARQ) for 1024QAM, (e.g. MCS index #31 in Table 5). Table 5 also includes an entry for supporting multiple TBS values (e.g. 37, 37A) corresponding to the maximum transport block size to accommodate different peak data rates for different overhead. It should be noted that Table 5 is provided as an example, and the number of 1024QAM entries may be different and the removed entries from the legacy MCS table (e.g. Table 4) may be selected differently.

Table 5

| MCS Index $I_{MCS}$ | Modulation Order $Q_m$ | TBS Index $I_{TSS}$ |
|---|---|---|
| 0 | 2 | 0 |
| 1 | 2 | 2 |
| 2 | 2 | 4 |
| 3 | 2 | 6 |
| 4 | 2 | 8 |
| 5 | 4 | 10 |
| 6 | 4 | 12 |
| 7 | 4 | 14 |
| 8 | 6 | 16 |
| 9 | 6 | 18 |
| 10 | 6 | 19 |

(continued)

| MCS Index $I_{MCS}$ | Modulation Order $Q_m$ | TBS Index $I_{TSS}$ |
|---|---|---|
| 11 | 6 | 20 |
| 12 | 6 | 21 |
| 13 | 6 | 22 |
| 14 | 6 | 23 |
| 15 | 6 | 24 |
| 16 | 8 | 25 |
| 17 | 8 | 27 |
| 18 | 8 | 28 |
| 19 | 8 | 29 |
| 20 | 8 | 30 |
| 21 | 8 | 31 |
| 22 | 8 | 32 |
| 23 | 10 | 34 |
| 24 | 10 | 35 |
| 25 | 10 | 36 |
| 26 | 10 | 37/37A |
| 27 | 2 | reserved |
| 28 | 4 | |
| 29 | 6 | |
| 30 | 8 | |
| 31 | 10 | |

A RAN node 111/112 may configure 1024QAM CQI and MCS tables for a UE 101/102. The configuration of 1024QAM CQI and MCS may be controlled by using higher layer configuration signaling, (e.g. RRC signaling). The higher layer signaling for 1024QAM configuration may be common for MCS and CQI, and may be defined per component carrier (CC).

In another example, the configuration of 1024QAM CQI table may be per CC per CSI subframe set, if at least one CSI subframe set is configured for a UE 101/102. A CSI subframe set is a set of subframes configured for a UE 101/102 to perform channel measurements and CQI reporting. Two CSI subframe sets may be configured for a UE 101/102. In one example, if one CSI subframe set is configured with the 1024QAM CQI table, the UE 101/102 reports a CQI using the 1024QAM CQI table for the configured CSI subframe set and reports a CQI using a legacy CQI table (a CQI table supporting lower than 1024QAM, such as 64QAM CQI table in Table 1 or a256QAM CQI table in Table 2, etc.) for another CSI subframe set. In examples, if at least one CSI subframe set is configured with a 1024QAM CQI table, the UE 101/102 may assume the MCS table for 1024QAM on a given CC for downlink transmissions to the UE 101/102, i.e. if at least one CSI subframe set is configured with a 1024QAM CQI table, the UE 101/102 may demodulate downlink transmissions using the MCS table for 1024QAM on the given CC.

In order to resolve ambiguity in MCS scheduling during RRC configuration for 1024QAM, a fallback mode operation based on the legacy CQI and/or MCS table (e.g. the CQI and MCS table supporting 64QAM (or alternatively 256QAM)) may be implemented. For example, after configuration of 1024QAM, the MCS table with 1024QAM entries may be valid for a PDSCH transmission scheduled by a C-RNTI or an SPS-C-RNTI using any DCI formats except DCI formats 1A and 1C. A PDSCH transmission scheduled by other RNTIs or by using a DCI formats 1A and 1C may be demodulated with the legacy MCS table (e.g. the MCS table supporting up to 64QAM or 256QAM). For example, a PDSCH transmission scheduled by a paging radio network temporary identity (P-RNTI), random access radio network temporary identity (RA-RNTI), or system information radio network temporary identity (SI-RNTI) may use the legacy MCS table irrespective of 1024QAM configuration.

FIG. 5 shows an example constellation map for 1024QAM. If 1024QAM is used for modulation, 10 bits of data bits ($b_i$, i=0...9) are mapped to one of the constellation points in FIG. 5. As shown in FIG. 5, the reliabilities of the Gray mapped bits vary from the most significant bit (MSB) to the least significant bit (LSB). Currently, unequal reliability of the bits remains during retransmissions, which degrades the performance of channel decoding.

In examples, constellation bit swapping (i.e. "constellation remapping" that may be referred to as "swapping bit positions") may be implemented between a UE 101/102 and a RAN node 111/112 for retransmissions. Constellation bit swapping in accordance with the examples disclosed herein may provide performance enhancement by defining different bit mapping rules between the UE 101/102 and the RAN node 111/112 for retransmissions.

For example, a RAN node 111/112 sends a PDSCH to a UE 101/102, and the UE 101/102 sends HARQ feedback to the RAN node 111/112. The RAN node 111/112 maps data bits to 1024QAM constellation points, e.g. as shown in FIG. 5 for initial transmission. If the decoding fails, the UE 101/102 sends a negative acknowledgement (NACK) to the RAN node 111/112, and the RAN node 111/112 retransmits the transport block to the UE 101/102. For the retransmissions, the RAN node 111/112 may use different constellation mapping, (e.g. may swap bit positions). In one example, the constellation mapping may be determined explicitly or implicitly based on the retransmission number for the same HARQ process. Constellation bit swapping provides significant increase in decoding performance due to averaging of bit error probabilities over retransmissions. The constellation bit swapping may also be implemented in the UE 101/102 for uplink transmissions.

For example, for the initial transmission with 1024QAM modulation, ten bits ($b_i$, $b_{i+1}$, $b_{i+2}$, $b_{i+3}$, $b_{i+4}$, $b_{i+5}$, $b_{i+6}$, $b_{i+7}$, $b_{i+8}$, $b_{i+9}$) may be mapped to a 1024QAM modulation symbol as follows:

$$x = \frac{1}{\sqrt{682}}(1 - 2b_i)\left[16 - (1 - 2b_{i+2})\left[8 - (1 - 2b_{i+4})\left[4 - (1 - 2b_{i+6})[2 - (1 - 2b_{i+8})]\right]\right]\right]$$
$$+ j\frac{1}{\sqrt{682}}(1 - 2b_{i+1})\left[16 - (1 - 2b_{i+3})\left[8 - (1 - 2b_{i+5})\left[4 - (1 - 2b_{i+7})[2 - (1 - 2b_{i+9})]\right]\right]\right]. \qquad \text{Equation (1)}$$

In one example, depending on the retransmission order (transmission index), the 1024QAM constellation mapping may be changed for retransmission as follows:

$$x = \frac{1}{\sqrt{682}}(1 - 2b_{i+8})\left[16 - (1 - 2b_{i+6})\left[8 - (1 - 2b_{i+4})\left[4 - (1 - 2b_{i+2})[2 - (1 - 2b_i)]\right]\right]\right]$$
$$+ j\frac{1}{\sqrt{682}}(1 - 2b_{i+9})\left[16 - (1 - 2b_{i+7})\left[8 - (1 - 2b_{i+5})\left[4 - (1 - 2b_{i+3})[2 - (1 - 2b_{i+1})]\right]\right]\right], \qquad \text{Equation (2)}$$

where, in this example, positions of ($b_i$,$b_{i+8}$), ($b_{i+1}$,$b_{i+9}$) , ($b_{i+2}$, $b_{i+6}$), ($b_{i+3}$, $b_{i+7}$) are swapped with each other depending on the transmission index.

In some examples, constellation bit swapping may be indicated or configured by the RAN node 111/112. For example, dedicated bit(s) in DCI transmitted to the UE 101/102 may be used to indicate whether swapping of the bits should be used. In the other example, swapping may be implemented depending on the retransmission index for the same HARQ process. For example, if the retransmission index is odd (e.g. first, third, fifth, etc.), the UE 101/102 may assume that constellation bit swapping is implemented, and if the retransmission index is even (e.g. second, fourth, sixth, etc.) the UE 101/102 may assume that no constellation bit swapping has been implemented comparing to the initial transmission.

In other examples, the swapping of the bits may be used when the redundancy version (RV) is the same with the initial transmission. In other examples, the swapping of the bits may be used irrespective of the RV of the retransmission.

In multi-antenna transmission/reception using multiple-input multiple-output (MIMO), different constellation mapping may be used on different MIMO layers of the same codeword for initial transmissions and/or retransmissions. For example, if a RAN access node 111/112 transmits four layers of data using four or more antennas, each of the four spatial layers may use a different 1024QAM constellation mapping. This MIMO scheme may be implemented either for the initial transmissions or retransmissions, or both.

Constellation bit swapping in accordance with the examples disclosed herein can provide significant increase in decoding performance due to averaging of bit error probabilities over retransmissions.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

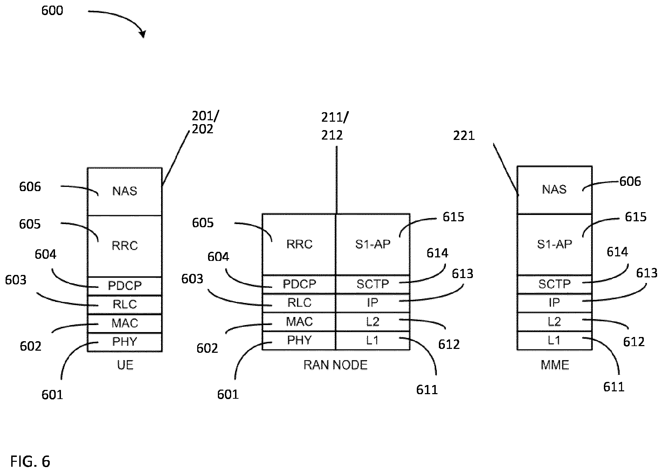

FIG. 6 is an illustration of a control plane protocol stack in accordance with some embodiments. In this embodiment, a control plane 600 is shown as a communications protocol stack between the UE 101 (or alternatively, the UE 102), the RAN node 111 (or alternatively, the RAN node 112), and the MME 121.

The PHY layer 601 may transmit or receive information used by the MAC layer 602 over one or more air interfaces. The PHY layer 601 may further perform link adaptation or adaptive modulation and coding (AMC), power control, cell search (e.g., for initial synchronization and handover purposes), and other measurements used by higher layers, such as the RRC layer 605. The PHY layer 601 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 602 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 603 may operate in a plurality of modes of operation, including: Transparent Mode (TM), Unacknowledged Mode (UM), and Acknowledged Mode (AM). The RLC layer 603 may execute transfer of upper layer protocol data units (PDUs), error correction through automatic repeat request (ARQ) for AM data transfers, and concatenation, segmentation and reassembly of RLC SDUs for UM and AM data transfers. The RLC layer 603 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 604 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 605 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 101 and the RAN node 111 may utilize a Uu interface (e.g., an LTE-Uu interface) to exchange control plane data via a protocol stack comprising the PHY layer 601, the MAC layer 602, the RLC layer 603, the PDCP layer 604, and the RRC layer 605.

The non-access stratum (NAS) protocols 606 form the highest stratum of the control plane between the UE 101 and the MME 121. The NAS protocols 606 support the mobility of the UE 101 and the session management procedures to establish and maintain IP connectivity between the UE 101 and the P-GW 123.

The S1 Application Protocol (S1-AP) layer 615 may support the functions of the S1 interface and comprise Elementary Procedures (EPs). An EP is a unit of interaction between the RAN node 111 and the CN 120. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) 614 may ensure reliable delivery of signaling messages between the RAN node 111 and the MME 121 based, in part, on the IP protocol, supported by the IP layer 613. The L2 layer 612 and the L1 layer 611 may refer to communication links (e.g., wired or wireless) used by the RAN node and the MME to exchange information.

The RAN node 111 and the MME 121 may utilize an S1-MME interface to exchange control plane data via a protocol stack comprising the L1 layer 611, the L2 layer 612, the IP layer 613, the SCTP layer 614, and the S1-AP layer 615.

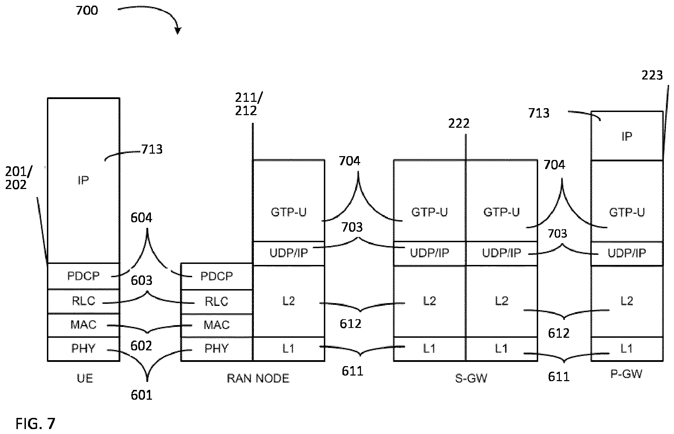

FIG. 7 is an illustration of a user plane protocol stack in accordance with some embodiments. In this embodiment, a user plane 700 is shown as a communications protocol stack between the UE 101 (or alternatively, the UE 102), the RAN node 111 (or alternatively, the RAN node 112), the S-GW 122, and the P-GW 123. The user plane 700 may utilize at least some of the same protocol layers as the control plane 600. For example, the UE 101 and the RAN node 111 may utilize a Uu interface (e.g., an LTE-Uu interface) to exchange user plane data via a protocol stack comprising the PHY layer 601, the MAC layer 602, the RLC layer 603, the PDCP layer 604.

The General Packet Radio Service (GPRS) Tunneling Protocol for the user plane (GTP-U) layer 704 may be used for carrying user data within the GPRS core network and between the radio access network and the core network. The user data transported can be packets in any of IPv4, IPv6, or PPP formats, for example. The UDP and IP security (UDP/IP) layer 703 may provide checksums for data integrity, port numbers for addressing different functions at the source and destination, and encryption and authentication on the selected data flows. The RAN node 111 and the S-GW 122 may utilize an S1-U interface to exchange user plane data via a protocol stack comprising the L1 layer 611, the L2 layer 612, the UDP/IP layer 703, and the GTP-U layer 704. The S-GW 122 and the P-GW 123 may utilize an S5/S8a interface to exchange user plane data via a protocol stack comprising the L1 layer 611, the L2 layer 612, the UDP/IP layer 703, and the GTP-U layer 704. As discussed above with respect to FIG. 6, NAS protocols support the mobility of the UE 101 and the session management procedures to establish and maintain IP connectivity between the UE 101 and the P-GW 123.

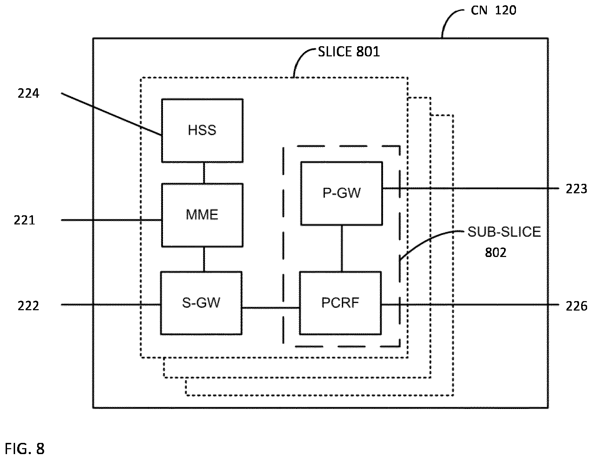

FIG. 8 illustrates components of a core network in accordance with some embodiments. The components of the CN 120 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the CN 120 may be referred to as a network slice 801. A logical instantiation of a portion of the CN 120 may be referred to as a network sub-slice 802 (e.g., the network sub-slice 802 is shown to include the PGW 123 and the PCRF 126).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

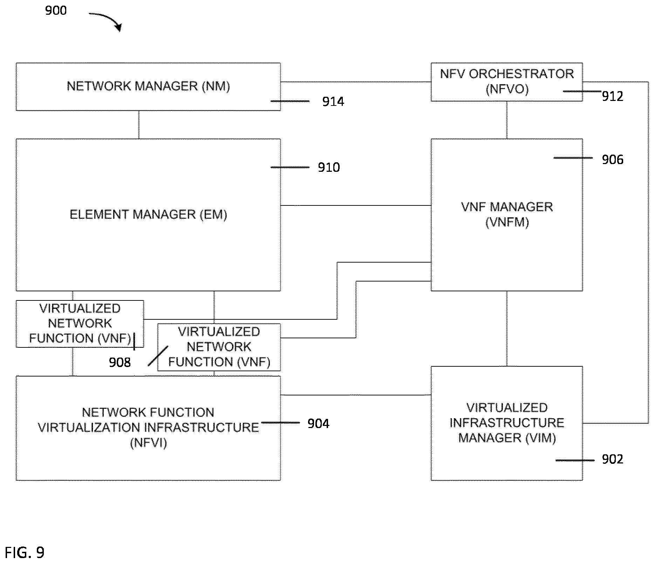

FIG. 9 is a block diagram illustrating components, according to some example embodiments, of a system 900 to support NFV. The system 900 is illustrated as including a virtualized infrastructure manager (VIM) 902, a network function virtualization infrastructure (NFVI) 904, a VNF manager (VNFM) 906, virtualized network functions (VNFs) 908, an element manager (EM) 910, an NFV Orchestrator (NFVO) 912, and a network manager (NM) 914.

The VIM 902 manages the resources of the NFVI 904. The NFVI 904 can include physical or virtual resources and applications (including hypervisors) used to execute the system 900. The VIM 902 may manage the life cycle of virtual resources with the NFVI 904 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 906 may manage the VNFs 908. The VNFs 908 may be used to execute EPC components/functions. The VNFM 906 may manage the life cycle of the VNFs 908 and track performance, fault and security of the virtual aspects of VNFs 908. The EM 910 may track the performance, fault and security of the functional aspects of VNFs 908. The tracking data from the VNFM 906 and the EM 910 may comprise, for example, performance measurement (PM) data used by the VIM 902 or the NFVI 904. Both the VNFM 906 and the EM 910 can scale up/down the quantity of VNFs of the system 900.

The NFVO 912 may coordinate, authorize, release and engage resources of the NFVI 904 in order to provide the requested service (e.g., to execute an EPC function, component, or slice). The NM 914 may provide a package of end-user functions with the responsibility for the management of a network, which may include network elements with VNFs, non-virtualized network functions, or both (management of the VNFs may occur via the EM 910).

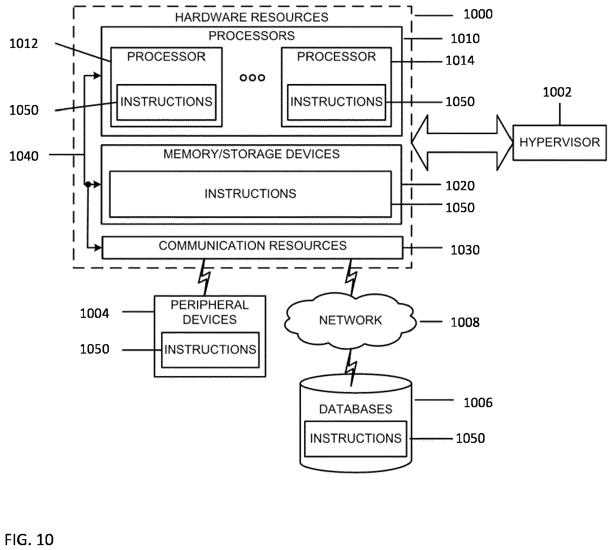

FIG. 10 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 10 shows a diagrammatic representation of hardware resources 1000 including one or more processors (or processor cores) 1010, one or more memory/storage devices 1020, and one or more communication resources 1030, each of which may be communicatively coupled via a bus 1040. For embodiments where node virtualization (e.g., NFV) is utilized, a hypervisor 1002 may be executed to provide an execution environment for one or more network slices/sub-slices to utilize the hardware resources 1000.

The processors 1010 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1012 and a processor 1014.

The memory/storage devices 1020 may include main memory, disk storage, or any suitable combination thereof. The memory/storage devices 1020 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1030 may include interconnection or network interface components or other suitable devices to communicate with one or more peripheral devices 1004 or one or more databases 1006 via a network 1008. For example, the communication resources 1030 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions 1050 may comprise software, a program, an application, an applet, an app, or other executable code for causing at least any of the processors 1010 to perform any one or more of the methodologies discussed herein. The instructions 1050 may reside, completely or partially, within at least one of the processors 1010 (e.g., within the processor's cache memory), the memory/storage devices 1020, or any suitable combination thereof. Furthermore, any portion of the instructions 1050 may be transferred to the hardware resources 1000 from any combination of the peripheral devices 1004 or the databases 1006. Accordingly, the memory of processors 1010, the memory/storage devices 1020, the peripheral devices 1004, and the databases 1006 are examples of computer-readable and machine-readable media.

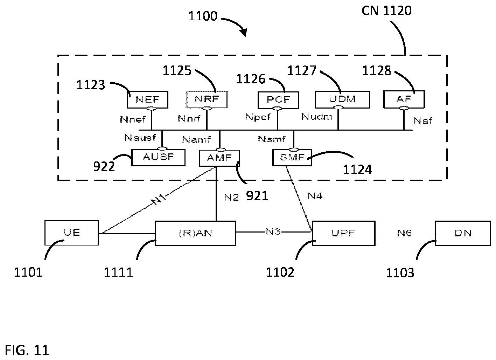

FIG. 11 illustrates an architecture of a system 1100 of a network in accordance with some embodiments. The system 1100 is shown to include a UE 1101, which may be the same or similar to UEs 101 and 102 discussed previously; a RAN node 1111, which may be the same or similar to RAN nodes 111 and 112 discussed previously; a User Plane Function (UPF) 1102; a Data network (DN) 1103, which may be, for example, operator services, Internet access or 3rd party services; and a 5G Core Network (5GC or CN) 1120.

The CN 1120 may include an Authentication Server Function (AUSF) 1122; a Core Access and Mobility Management Function (AMF) 1121; a Session Management Function (SMF) 1124; a Network Exposure Function (NEF) 1123; a Policy Control function (PCF) 1126; a Network Function (NF) Repository Function (NRF) 1125; a Unified Data Management (UDM) 1127; and an Application Function (AF) 1128. The CN 1120 may also include other elements that are not shown, such as a Structured Data Storage network function (SDSF), an Unstructured Data Storage network function (UDSF), and the like.

The UPF 1102 may act as an anchor point for intra-RAT and inter-RAT mobility, an external PDU session point of interconnect to DN 1103, and a branching point to support multi-homed PDU session. The UPF 1102 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 1102 may include an uplink classifier to support routing traffic flows to a data network. The DN 1103 may represent various network operator services, Internet access, or third party services. NY 1103 may include, or be similar to application server 130 discussed previously.

The AUSF 1122 may store data for authentication of UE 1101 and handle authentication related functionality. Facilitates a common authentication framework for various access types.

The AMF 1121 may be responsible for registration management (e.g., for registering UE 1101, etc.), connection management, reachability management, mobility management, and lawful interception of AMF-related events, and access authentication and authorization. AMF 1121 may provide transport for SM messages between and SMF 1124, and act as a transparent proxy for routing SM messages. AMF 1121 may also provide transport for short message service (SMS) messages between UE 1101 and an SMS function (SMSF) (not shown by FIG. 11). AMF 1121 may act as Security Anchor Function (SEA), which may include interaction with the AUSF 1122 and the UE 1101, receipt of an intermediate key that was established as a result of the UE 1101 authentication process. Where USIM based authentication is used, the AMF 1121 may retrieve the security material from the AUSF 1122. AMF 1121 may also include a Security Context Management (SCM) function, which receives a key from the SEA that it uses to derive access-network specific keys. Furthermore, AMF 1121 may be a termination point of RAN CP interface (N2 reference point), a termination point of NAS (N1) signalling, and perform NAS ciphering and integrity protection.

AMF 1121 may also support NAS signalling with a UE 1101 over an N3 interworking-function (IWF) interface. The N3IWF may be used to provide access to untrusted entities. N33IWF may be a termination point for the N2 and N3 interfaces for control plane and user plane, respectively, and as such, may handle N2 signalling from SMF and AMF for PDU sessions and QoS, encapsulate/de-encapsulate packets for IPSec and N3 tunnelling, mark N3 user-plane packets in the uplink, and enforce QoS corresponding to N3 packet marking taking into account QoS requirements associated to such marking received over N2. N3IWF may also relay uplink and downlink control-plane NAS (N1) signalling between the UE 1101 and AMF 1121, and relay uplink and downlink user-plane packets between the UE 1101 and UPF 1102. The N3IWF also provides mechanisms for IPsec tunnel establishment with the UE 1101.

The SMF 1124 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 1124 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signalling for PDU session authorization/authentication by external DN.

The NEF 1123 may provide means for securely exposing the services and capabilities provided by 3GPP network functions for third party, internal exposure/re-exposure, Application Functions (e.g., AF 1128), edge computing or fog computing systems, etc. In such embodiments, the NEF 1123 may authenticate, authorize, and/or throttle the AFs. NEF 1123 may also translate information exchanged with the AF 1128and information exchanged with internal network functions. For example, the NEF 1123 may translate between an AF-Service-Identifier and an internal 5GC information. NEF 1123 may also receive information from other network functions (NFs) based on exposed capabilities of other network functions. This information may be stored at the NEF 1123 as structured data, or at a data storage NF using a standardized interfaces. The stored information can then be re-exposed by the NEF 1123 to other NFs and AFs, and/or used for other purposes such as analytics.

The NRF 1125 may support service discovery functions, receive NF Discovery Requests from NF instances, and provide the information of the discovered NF instances to the NF instances. NRF 1125 also maintains information of available NF instances and their supported services.

The PCF 1126 may provide policy rules to control plane function(s) to enforce them, and may also support unified policy framework to govern network behaviour. The PCF 1126 may also implement a front end (FE) to access subscription information relevant for policy decisions in a UDR of UDM 1127.

The UDM 1127 may handle subscription-related information to support the network entities' handling of communication sessions, and may store subscription data of UE 1101. The UDM 1127 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 1126. UDM 1127 may also support SMS management, wherein an SMS-FE implements the similar application logic as discussed previously.

The AF 1128 may provide application influence on traffic routing, access to the Network Capability Exposure (NCE), and interact with the policy framework for policy control. The NCE may be a mechanism that allows the 5GC and AF 1128 to provide information to each other via NEF 1123, which may be used for edge computing implementations. In such implementations, the network operator and third party services may be hosted close to the UE 1101 access point of attachment to achieve an efficient service delivery through the reduced end-to-end latency and load on the transport network. For edge computing implementations, the 5GC may select a UPF 1102 close to the UE 1101 and execute traffic steering from the UPF 1102 to DN 1103 via the N6 interface. This may be based on the UE subscription data, UE location, and information provided by the AF 1128. In this way, the AF 1128 may influence UPF (re)selection and traffic routing. Based on operator deployment, when AF 1128 is considered to be a trusted entity, the network operator may permit AF 1128 to interact directly with relevant NFs.

As discussed previously, the CN 1120 may include an SMSF, which may be responsible for SMS subscription checking and verification, and relaying SM messages to/from the UE 1101 to/from other entities, such as an SMS-GMSC/IWMSC/SMS-router. The SMS may also interact with AMF 1121 and UDM 1127 for notification procedure that the UE 1101 is available for SMS transfer (e.g., set a UE not reachable flag, and notifying UDM 1127 when UE 1101 is available for SMS).

The system 1100 may include the following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 1100 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an N5 reference point may be between the PCF and the AF; an N7 reference point may be between the PCF and the SMF; an N11 reference point between the AMF and SMF; etc. In some embodiments, the CN 1120 may include an Nx interface, which is an inter-CN interface between the MME (e.g., MME 121) and the AMF 1121 in order to enable interworking between CN 1120 and CN 120.

Although not shown by FIG. 11, system 1100 may include multiple RAN nodes 1111 wherein an Xn interface is defined between two or more RAN nodes 1111 (e.g., gNBs and the like) that connecting to 5GC 1120, between a RAN node 1111 (e.g., gNB) connecting to 5GC 1120 and an eNB (e.g., a RAN node 111 of FIG. 1), and/or between two eNBs connecting to 5GC 1120.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 1101 in a connected mode (e.g., CM-CONNECTED) including functionality to manage the UE mobility for connected mode between one or more RAN nodes 1111. The mobility support may include context transfer from an old (source) serving RAN node 1111 to new (target) serving RAN node 1111; and control of user plane tunnels between old (source) serving RAN node 1111 to new (target) serving RAN node 1111.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be same or similar to the user plane and/or control plane protocol stack(s) shown and described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown.

Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A baseband circuitry (400) configured to use 1024 quadrature amplitude modulation, 1024QAM, for wireless communication, the baseband circuitry (400) comprising:

   an interface (402) to send and receive data to and from a radio frequency, RF, circuitry;
   a memory (406) configured to store instructions; and
   a processor (404) configured to execute the instructions, wherein the instructions are configured to generate a channel quality indicator, CQI, report corresponding to a CQI table including an entry for 1024QAM modulation, wherein the CQI table is configured per channel state information, CSI, subframe set, and process baseband signals received via the RF circuitry from a radio access network, RAN, using a modulation and coding scheme, MCS, table including an entry for 1024QAM modulation if 1024QAM is configured for at least one CSI subframe set,
   wherein the processor (404) is configured to demodulate a physical downlink shared channel, PDSCH, signal using different 1024QAM constellation mapping on different multiple-input multiple-output, MIMO, layers of a same codeword.

2. The baseband circuitry (400) of claim 1, wherein the instructions are configured to generate a first CQI report corresponding to a first CQI table including an entry for 1024QAM modulation for a first CSI subframe set and generate a second CQI report corresponding to a second CQI table including an entry for QAM modulation lower than 1024QAM for a second CQI subframe set.

3. The baseband circuitry (400) as in any one of claims 1-2, wherein the instructions are configured to use the MCS table including an entry for 1024QAM modulation in demodulating a physical downlink shared channel, PDSCH, scheduled by a cell-radio network temporary identity, C-RNTI, or a semi-persistent scheduling-cell-radio network temporary identity, SPS-C-RNTI.

4. The baseband circuitry (400) of claim 3, wherein the instructions are configured to use the MCS table including an entry for 1024QAM if the PDSCH is scheduled by a downlink control information, DCI, format other than DCI formats 1A and 1C.

5. The baseband circuitry (400) as in any one of claims 1-4, wherein a last CQI entry corresponding to 1024QAM in the CQI table is obtained by linear scaling of spectral efficiency of a highest CQI entry in a CQI table supporting 64QAM or 256QAM according to a ratio of modulation orders, and a second last CQI entry corresponding to 1024QAM in the CQI table is obtained based on averaging of spectral efficiency values of the last CQI entry corresponding to 1024QAM and a CQI entry corresponding to 256QAM with a highest spectral efficiency in a CQI table supporting 256QAM, wherein effective code rate values for entries in the CQI table are obtained by dividing the spectral efficiency values by a corresponding modulation order and multiplying with 1024 and then rounding to a nearest integer.

6. The baseband circuitry (400) as in any one of claims 1-5, wherein the processor (404) is configured to demodulate a first physical downlink shared channel, PDSCH, signal based on first constellation mapping for 1024QAM modulation if a corresponding downlink control information for the first PDSCH signal indicates that the first PDSCH signal is an initial transmission, and demodulate a second PDSCH signal based on second constellation mapping for 1024QAM if a corresponding downlink control information for the second PDSCH signal indicates that the second PDSCH signal is a retransmission.

7. The baseband circuitry (400) of claim 6, wherein ($b_i$, $b_{i+1}$, ..., $b_{i+9}$) are bits mapped to a 1024QAM modulation symbol, and the processor (404) is configured to swap positions of ($b_i$, $b_{i+8}$), ($b_{i+1}$, $b_{i+9}$), ($b_{i+2}$, $b_{i+6}$), ($b_{i+3}$, $b_{i+7}$) with each other for the second constellation mapping.

8. A baseband circuitry (450) configured to use 1024 quadrature amplitude modulation, 1024QAM, for wireless transmissions and receptions, the baseband circuitry comprising:

   an interface (452) to send and receive data to and from a radio frequency, RF, circuitry;
   a memory (456) configured to store instructions; and
   a processor (454) configured to execute the instructions, wherein the instructions are configured to process a channel quality indicator, CQI, report received from a user equipment, UE, (101, 102) corresponding to a CQI table including an entry for 1024QAM modulation, wherein the CQI table is configured per CSI subframe set, and schedule a downlink transmission for the UE using a modulation and coding scheme, MCS, table including an entry for 1024QAM modulation if 1024QAM is configured for at least one CSI subframe set for the UE (101, 102),
   wherein the processor (454) is configured to modulate physical downlink shared channel, PDSCH, data using different 1024QAM constellation mapping on different multiple-input multiple-output, MIMO, layers of a same codeword.

9. The baseband circuitry (450) of claim 8, wherein the instructions are configured to process a first CQI report corresponding to a first CQI table including an entry for 1024QAM modulation for a first CSI subframe set and process a second CQI report corresponding to a second CQI table including an entry for QAM modulation lower than 1024QAM for a second CQI subframe set.

10. The baseband circuitry (450) as in any one of claims 8-9, wherein the instructions are configured to use the MCS table including an entry for 1024QAM modulation in modulating a physical downlink shared channel, PDSCH, scheduled by a cell-radio network temporary identity, C-RNTI, or a semi-persistent scheduling-cell-radio network temporary identity, SPS-C-RNTI.

11. The baseband circuitry (450) of claim 10, wherein the instructions are configured to use the MCS table including an entry for 1024QAM for modulating a PDSCH scheduled by a downlink control information, DCI, format other than DCI formats 1A and 1C.

12. The baseband circuitry (450) as in any one of claims 8-11, wherein the processor (454) is configured to modulate first physical downlink shared channel, PDSCH, data based on first constellation mapping for 1024QAM modulation if the first PDSCH data is an initial transmission, and modulate second PDSCH data based on second constellation mapping for 1024QAM if the second PDSCH data is a retransmission.

13. The baseband circuitry (450) of claim 12, wherein ($b_i$, $b_{i+1}$, ..., $b_{i+9}$) are bits mapped to a 1024QAM modulation symbol, and the processor (454) is configured to swap positions of ($b_i$, $b_{i+8}$), ($b_{i+1}$, $b_{i+9}$), ($b_{i+2}$, $b_{i+6}$), ($b_{i+3}$, $b_{i+7}$) with each other for the second constellation mapping.

**Patentansprüche**

1. Basisbandschaltung (400), die konfiguriert ist zum Verwenden von 1024-Quadratur-Amplituden-Modulation, 1024QAM, für drahtlose Kommunikation, die Basisbandschaltung (400) umfassend:

   eine Schnittstelle (402) zum Senden und Empfangen von Daten an und von einer Radio-Frequency-, RF-, Schaltung;
   einen Speicher (406), der konfiguriert ist zum Speichern von Anweisungen; und
   einen Prozessor (404), der konfiguriert ist zum Ausführen der Anweisungen, wobei die Anweisungen konfiguriert sind zum Erzeugen eines Channel-Quality-Indicator-, CQI-, Berichts, der einer CQI-Tabelle entspricht, welche einen Eintrag für 1024QAM-Modulation beinhaltet, wobei die CQI-Tabelle pro Channel-State-Information-, CSI-, Subrahmen-Satz konfiguriert ist, und zum Verarbeiten von Basisbandsignalen, die mittels der RF-Schaltung von einem Radio-Access-Network, RAN, unter Verwenden einer Modulation-and-Coding-Scheme-, MCS-, Tabelle empfangen werden, welche einen Eintrag für 10240AM-Modulation beinhaltet falls 1024QAM für mindestens einen CSI-Subrahmen-Satz konfiguriert ist,
wobei der Prozessor (404) konfiguriert ist zum Demodulieren eines Physical-Downlink-Shared-Channel-, PDSCH-, Signals unter Verwenden verschiedener 1024QAM-Konstellationensabbildungen auf verschiedenen Multiple-Input-Multiple-Output-, MIMO-, Schichten eines gleichen Codewortes.

2. Basisbandschaltung (400) nach Anspruch 1, wobei die Anweisungen konfiguriert sind zum Erzeugen eines ersten CQI-Berichts, der einer ersten CQI-Tabelle entspricht, welche einen Eintrag für 1024QAM-Modulation für einen ersten CSI-Subrahmen-Satz beinhaltet, und zum Erzeugen eines zweiten CQI-Berichts, der einer zweiten CQI-Tabelle entspricht, welche einen Eintrag für QAM-Modulation niedriger als 1024QAM-Modulation für einen zweiten CQI-Subrahmen-Satz beinhaltet.

3. Basisbandschaltung (400) nach einem der Ansprüche 1-2, wobei die Anweisungen konfiguriert sind zum Verwenden der MCS-Tabelle, welche einen Eintrag für 1024QAM-Modulation beinhaltet, beim Demodulieren eines Physical-Downlink-Shared-Channel-, PDSCH, der durch eine Cell-Radio-Network-Temporary-Identity-, C-RNTI, oder eine Semi-Persistent-Scheduling-Cell-Radio-Network-Temporary-Identity, SPS-C-RNTI, geplant ist.

4. Basisbandschaltung (400) nach Anspruch 3, wobei die Anweisungen konfiguriert sind zum Verwenden der MCS-Tabelle, welche einen Eintrag für 1024QAM-Modulation beinhaltet, falls der PDSCH durch ein Downlink-Control-Information-, DCI-, Format außer DCI-Formate 1A und 1C geplant ist.

5. Basisbandschaltung (400) nach einem der Ansprüche 1-4, wobei ein letzter CQI-Eintrag, der 1024QAM in der CQI-Tabelle entspricht, durch lineares Skalieren von spektraler Effizienz eines höchstens CQI-Eintrags in einer CQI-Tabelle erhalten wird, die 64QAM oder 256QAM gemäß eines Verhältnisses von Modulationsreihenfolgen unterstützt, und ein zweiter letzter CQI-Eintrag, der 1024QAM in der CQI-Tabelle entspricht, basierend auf Mittelung von spektralen Effizienzwerten des letzten CQI-Eintrags, der 1024QAM entspricht, und einem CQI-Eintrag, der 256QAM mit einer höchsten spektralen Effizienz in einer CQI-Tabelle entspricht, die 256QAM unterstützt, erhalten wird, wobei effektive Code-Raten-Werte für Eintrag in der CQI-Tabelle erhalten werden durch Dividieren der spektralen Effizienzwerte durch eine entsprechende Modulationsreihenfolge und Multiplizieren mit 1024 und anschließend Runden auf die nächste ganze Zahl.

6. Basisbandschaltung (400) nach einem der Ansprüche 1-5, wobei der Prozessor (404) konfiguriert ist zum Demodulieren eines ersten Physical-Downlink-Shared-Channel-, PDSCH-, Signals basierend auf erster Konstellationsabbildung für 1024QAM-Modulation falls eine entsprechende Downlink-Control-Information für das erste PDSCH-Signal anzeigt, dass das erste PDSCH-Signal eine anfängliche Übertragung ist, und zum Demodulieren eines zweiten PDSCH-Signals basierend auf einer zweiten Konstellationsabbildung für 1024QAM falls eine entsprechende Downlink-Control-Information für das zweite PDSCH-Signal anzeigt, dass das zweite PDSCH-Signal eine Wiederübertragung ist.

7. Basisbandschaltung (400) nach Anspruch 6, wobei ($b_i$, $b_{i+1}$, ..., $b_{i+9}$) Bits sind, die auf ein 1024QAM-Modulationssymbol abgebildet sind, und der Prozessor (404) konfiguriert ist zum Austauschen von Positionen von ($b_i$, $b_{i+8}$), ($b_{i+1}$, $b_{i+9}$), ($b_{i+2}$, $b_{i+6}$), ($b_{i+3}$, $b_{i+7}$) miteinander für die zweite Konstellationsabbildung.

8. Basisbandschaltung (450), die konfiguriert ist zum Verwenden von 1024-Quadratur-Amplituden-Modulation, 1024QAM, für drahtlose Übertragungen und Empfänge, die Basisbandschaltung umfassend:

eine Schnittstelle (452) zum Senden und Empfangen von Daten an und von einer Radio-Frequency-, RF-, Schaltung;
einen Speicher (456), der konfiguriert ist zum Speichern von Anweisungen; und
einen Prozessor (454), der konfiguriert ist zum Ausführen der Anweisungen, wobei die Anweisungen konfiguriert sind zum Verarbeitens eines Channel-Quality-Indicator-, CQI-, Berichts, der von einem Benutzergerät, UE, (101, 102) empfangen wird und der einer CQI Tabelle entspricht, welche einen Eintrag für 1024QAM-Modulation beinhaltet, wobei die CQI-Tabelle pro CSI-Subrahmen-Satz konfiguriert ist, und zum Planen einer Downlink-Übertragung für das UE unter Verwenden einer Modulation-and-Coding-Scheme-, MCS-, Tabelle, welche einen Eintrag für 1024QAM-Modulation beinhaltet falls 1024QAM für mindestens einen CSI-Subrahmen-Satz für das UE (101, 102) konfiguriert ist,
wobei der Prozessor (454) konfiguriert ist zum Modulieren von Physical-Downlink-Shared-Channel-, PDSCH-, Daten unter Verwenden verschiedener 1024QAM-Konstellationensabbildungen auf verschiedenen Multiple-Input-Multiple-Output-, MIMO-, Schichten eines gleichen Codewortes.

9. Basisbandschaltung (450) nach Anspruch 8, wobei die Anweisungen konfiguriert sind zum Verarbeiten eines ersten CQI-Berichts, der einer ersten CQI-Tabelle entspricht, welche einen Eintrag für 1024QAM-Modulation für einen ersten CSI-Subrahmen-Satz beinhaltet, und zum Verarbeiten eines zweiten CQI-Berichts, der einer zweiten CQI-Tabelle entspricht, welche einen Eintrag für QAM-Modulation niedriger als 1024QAM-Modulation für einen zweiten CQI-Subrahmen-Satz beinhaltet.

10. Basisbandschaltung (450) nach einem der Ansprüche 8-9, wobei die Anweisungen konfiguriert sind zum Verwenden der MCS-Tabelle, welche einen Eintrag für 1024QAM-Modulation beinhaltet, beim Modulieren eines Physical-Downlink-Shared-Channel, PDSCH, der durch eine Cell-Radio-Network-Temporary-Identity-, C-RNTI, oder eine Semi-Persistent-Scheduling-Cell-Radio-Network-Temporary-Identity, SPS-C-RNTI, geplant ist.

11. Basisbandschaltung (450) nach Anspruch 10, wobei die Anweisungen konfiguriert sind zum Verwenden der MCS-Tabelle, welche einen Eintrag für 1024QAM zum Modulieren eines PDSCH, der durch ein Downlink-Control-Information-, DCI-, Format außer DCI-Formate 1A und 1C geplant ist.

12. Basisbandschaltung (450) nach einem der Ansprüche 8-11, wobei der Prozessor (454) konfiguriert ist zum Modulieren erster Physical-Downlink-Shared-Channel-, PDSCH-, Daten basierend auf erster Konstellationsabbildung für 1024QAM-Modulation falls die ersten PDSCH-Daten eine anfängliche Übertragung sind, und zum Modulieren zweiter PDSCH-Daten basierend auf zweiter Konstellationsabbildung für 1024QAM falls die zweiten PDSCH-Daten eine Wiederübertragung sind.

13. Basisbandschaltung (450) nach Anspruch 12, wobei ($b_i$, $b_{i+1}$, ..., $b_{i+9}$) Bits sind, die auf ein 1024QAM-Modulationssymbol abgebildet sind, und der Prozessor (454) konfiguriert ist zum Austauschen von Positionen von ($b_i$, $b_{i+8}$), ($b_{i+1}$, $b_{i+9}$), ($b_{i+2}$, $b_{i+6}$), ($b_{i+3}$, $b_{i+7}$) miteinander für die zweite Konstellationsabbildung.

## Revendications

1. Une circuiterie en bande de base (400) configurée pour utiliser une modulation d'amplitude en quadrature 1024, 1024QAM, pour une communication sans fil, la circuiterie en bande de base (400) comprenant :

   une interface (402) pour envoyer une donnée à, et recevoir une donnée de, un ensemble de circuits radiofréquence, RF ;
   une mémoire (406) configurée pour stocker des instructions ; et
   un processeur (404) configuré pour exécuter les instructions, dans laquelle les instructions sont configurées pour générer un rapport d'indicateur de qualité de canal, CQI, correspondant à une table CQI incluant une entrée pour une modulation 1024QAM, dans laquelle la table CQI est configurée par ensemble de sous-trames d'information d'état de canal, CSI, et traiter des signaux en bande de base reçus via la circuiterie RF en provenance d'un réseau d'accès radio, RAN, en utilisant une table de schéma de modulation et de codage, MCS, incluant une entrée pour une modulation 1024QAM si 1024QAM est configurée pour au moins un ensemble de sous-trames CSI,
   dans laquelle le processeur (404) est configuré pour démoduler un signal de canal partagé de liaison descendante physique, PDSCH, en utilisant un mappage de constellation 1024QAM différent sur des couches à entrées multiples et sorties multiples, MIMO, différentes d'un même mot de code.

2. La circuiterie en bande de base (400) selon la revendication 1, dans laquelle les instructions sont configurées pour générer un premier rapport CQI correspondant à une première table CQI incluant une entrée pour une modulation 1024QAM pour un premier ensemble de sous-trames CSI et générer un second rapport CQI correspondant à une seconde table CQI incluant une entrée pour une modulation QAM inférieure à 1024QAM pour un second ensemble de sous-trames CQI.

3. La circuiterie en bande de base (400) selon l'une des revendications 1 à 2, dans laquelle les instructions sont configurées pour utiliser la table MCS incluant une entrée pour une modulation 1024QAM dans la démodulation d'un canal partagé de liaison descendante physique, PDSCH, planifié par une identité temporaire de réseau radio cellulaire, C-RNTI, ou une identité temporaire de réseau radio cellulaire de planification semi-persistante, SPS-C-RNTI.

4. La circuiterie en bande de base (400) selon la revendication 3, dans laquelle les instructions sont configurées pour utiliser la table MCS incluant une entrée pour 1024QAM si le PDSCH est planifié par un format d'information de contrôle de liaison descendante, DCI, autre que des formats DCI 1A et 1C.

5. La circuiterie en bande de base (400) selon l'une des revendications 1 à 4, dans laquelle une dernière entrée CQI correspondant à 1024QAM dans la table CQI est obtenue par une mise à l'échelle linéaire de rendement spectral d'une entrée CQI la plus élevée dans une table CQI prenant en charge 64QAM ou 256QAM selon un rapport d'ordres de modulation, et une avant-dernière entrée CQI correspondant à 1024QAM dans la table CQI est obtenue sur la base d'un moyennage de valeurs de rendement spectral de la dernière entrée CQI correspondant à 1024QAM et d'une entrée CQI correspondant à 256QAM avec un rendement spectral le plus élevé dans une table CQI prenant en charge 256QAM, dans laquelle des valeurs de débit de code effectif pour des entrées dans la table CQI sont obtenues en divisant les valeurs de rendement spectral par un ordre de modulation correspondant et en multipliant par 1024 puis en arrondissant à un entier le plus proche.

6. La circuiterie en bande de base (400) selon l'une des revendications 1 à 5, dans laquelle le processeur (404) est configuré pour démoduler un premier signal de canal partagé de liaison descendante physique, PDSCH, sur la base d'un premier mappage de constellation pour une modulation 1024QAM si une information de contrôle de liaison descendante correspondante pour le premier signal PDSCH indique que le premier signal PDSCH est une transmission initiale, et démoduler un second signal PDSCH sur la base d'un second mappage de constellation pour 1024QAM si une information de contrôle de liaison descendante correspondante pour le second signal PDSCH indique que le second signal PDSCH est une retransmission.

7. La circuiterie en bande de base (400) selon la revendication 6, dans laquelle ($b_i$, $b_{i+1}$, ..., $b_{i+9}$) sont des bits mappés sur un symbole de modulation 1024QAM, et le processeur (404) est configuré pour permuter des positions de ($b_i$, $b_{i+8}$), ($b_{i+1}$, $b_{i+9}$), ($b_{i+2}$, $b_{i+6}$), ($b_{i+3}$, $b_{i+7}$) les unes avec les autres pour le second mappage de constellation.

8. Une circuiterie en bande de base (450) configurée pour utiliser une modulation d'amplitude en quadrature 1024, 1024QAM, pour des émissions et des réceptions sans fil, la circuiterie en bande de base comprenant :

une interface (452) pour envoyer une donnée à, et recevoir une donnée de, un ensemble de circuits radiofréquence, RF ;
une mémoire (456) configurée pour stocker des instructions ; et
un processeur (454) configuré pour exécuter les instructions, dans laquelle les instructions sont configurées pour traiter un rapport d'indicateur de qualité de canal, CQI, reçu en provenance d'un équipement utilisateur, UE, (101, 102) correspondant à une table CQI incluant une entrée pour une modulation 1024QAM, dans laquelle la table CQI est configurée par ensemble de sous-trames CSI, et planifier une transmission de liaison descendante pour l'UE en utilisant une table de schéma de modulation et de codage, MCS, incluant une entrée pour une modulation 1024QAM si 1024QAM est configurée pour au moins un ensemble de sous-trames CSI pour l'UE (101, 102),
dans laquelle le processeur (454) est configuré pour moduler une donnée de canal partagé de liaison descendante physique, PDSCH, en utilisant un mappage de constellation 1024QAM différent sur des couches à entrées multiples et sorties multiples, MIMO, différentes d'un même mot de code.

9. La circuiterie en bande de base (450) selon la revendication 8, dans laquelle les instructions sont configurées pour traiter un premier rapport CQI correspondant à une première table CQI incluant une entrée pour une modulation 1024QAM pour un premier ensemble de sous-trames CSI et traiter un second rapport CQI correspondant à une seconde table CQI incluant une entrée pour une modulation QAM inférieure à 1024QAM pour un second ensemble de sous-trames CQI.

10. La circuiterie en bande de base (450) selon l'une des revendications 8 à 9, dans laquelle les instructions sont configurées pour utiliser la table MCS incluant une entrée pour une modulation 1024QAM dans la modulation d'un canal partagé de liaison descendante physique, PDSCH, planifié par une identité temporaire de réseau radio cellulaire, C-RNTI, ou une identité temporaire de réseau radio cellulaire de planification semi-persistante, SPS-C-RNTI.

**11.** La circuiterie en bande de base (450) selon la revendication 10, dans laquelle les instructions sont configurées pour utiliser la table MCS incluant une entrée pour 1024QAM pour moduler un PDSCH planifié par un format d'information de contrôle de liaison descendante, DCI, autre que des formats DCI 1A et 1C.

**12.** La circuiterie en bande de base (450) selon l'une des revendications 8 à 11, dans laquelle le processeur (454) est configuré pour moduler une première donnée de canal partagé de liaison descendante physique, PDSCH, sur la base d'un premier mappage de constellation pour une modulation 1024QAM si la première donnée PDSCH est une transmission initiale, et moduler une seconde donnée PDSCH sur la base d'un second mappage de constellation pour 1024QAM si la seconde donnée PDSCH est une retransmission.

**13.** La circuiterie en bande de base (450) selon la revendication 12, dans laquelle $(b_i, b_{i+1}, ..., b_{i+9})$ sont des bits mappés sur un symbole de modulation 1024QAM, et le processeur (454) est configuré pour permuter des positions de $(b_i, b_{i+8})$, $(b_{i+1}, b_{i+9})$, $(b_{i+2}, b_{i+6})$, $(b_{i+3}, b_{i+7})$ les unes avec les autres pour le second mappage de constellation.

FIG. 1

FIG. 2

FIG. 3

400

FIG. 4A

450

FIG. 4B

FIG. 5

600

201/
202

211/
212

221

606  NAS

605  RRC

604

603  PDCP
     RLC
     MAC

602  PHY

     UE

601

605  RRC    S1-AP    615

604

603  PDCP   SCTP     614
     RLC    IP       613
     MAC    L2
602  PHY    L1       612

     RAN NODE

601             611

606  NAS

615

     S1-AP

614

613  SCTP
     IP
     L2

612  L1

     MME

611

FIG. 6

FIG. 7

FIG. 8

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3142278 A
- US 2017207878 A

- EP 1313247 A
- US 2019202561 A

**Non-patent literature cited in the description**

- **HUAWEI et al.** Discussion on support of DL 1024QAM. *3GPP Draft, R1-1712091*